# FASCICULE DE BREVET EUROPEEN

(11) **EP 2 537 314 B1**
(45) Date de publication et mention de la délivrance du brevet: **15.04.2015**
(21) Numéro de dépôt: 11707692.7
(22) Date de dépôt: 04.02.2011
(51) Int. Cl.: H04L 29/06, H04L 12/24

(54) **PROCÉDÉ ET DISPOSITIF DE PROPAGATION D'ÉVÉNEMENTS DE GESTION DE SESSION**
VERFAHREN UND GERÄT ZUR AUSBREITUNG VON SITZUNGSVERWALTUNGSEREIGNISSEN
METHOD AND APPARATUS FOR PROPAGATING SESSION-MANAGEMENT EVENTS

(30) Priorité: 17.02.2010 FR 1051143
(43) Date de publication de la demande: 26.12.2012
(73) Titulaire: Evidian, 78340 Les Clayes Sous Bois (FR)
(72) Inventeur: COSSARD, David, F-95490 Vauréal (FR); DEDIEU, Gérard, F-78180 Montigny Le Bretonneux (FR)
(74) Mandataire: Camus, Olivier Jean-Claude
(86) Numéro de dépôt international: PCT/FR2011/050229
(87) Numéro de publication internationale: WO 2011/101573

(56) Documents cités:
- US-A1- 2003 229 900
- US-A1- 2004 098 446
- US-B1- 6 546 419
- US-B1- 6 889 321

## Description

### DOMAINE TECHNIQUE DE L'INVENTION

La présente invention a pour objet un procédé de propagation d'événements de gestion de session. Elle a également pour objet un dispositif apte à mettre en oeuvre un procédé de propagation d'événements de gestion de session. La présente invention a essentiellement pour but de faciliter la prise en compte d'événements de gestion de session pour un utilisateur utilisant une pluralité de machines, tout en assurant une sécurité optimale en terme de contrôle des utilisateurs des différentes machines considérées.

Le domaine de l'invention est, d'une façon générale, celui de l'utilisation simultanée de plusieurs machines par un même utilisateur. Les machines considérées sont essentiellement de type stations de travail, serveurs, routeurs....Dans différentes situations, notamment différents contextes professionnels, un même utilisateur est amené à travailler simultanément sur plusieurs machines. C'est le cas par exemple des traders, qui ont typiquement entre quatre et six machines à disposition, dans leur environnement immédiat - les différentes machines étant immédiatement accessible depuis leur position de travail, notamment leur bureau. Les opérations effectuées sur l'ensemble des machines sont visibles sur différents écrans visibles par l'utilisateur.

### ARRIERE-PLAN TECHNOLOGIQUE DE L'INVENTION

Lorsqu'un utilisateur de plusieurs machines souhaite mettre en fonctionnement l'ensemble des machines sur lesquelles il désire travailler, il doit inévitablement s'identifier, sur chaque machine, par l'intermédiaire d'une interface utilisateur de gestion de session. Différentes possibilités, correspondant à différents niveaux de sécurité et à différents niveaux de traçabilité des utilisateurs, sont offertes à un utilisateur pour s'identifier sur les machines sur lesquelles il souhaite travailler.

La moins sécurisée de ces possibilités réside dans la saisie d'un identifiant et d'un mot de passe dans l'interface utilisateur de gestion de session. Une solution plus sécurisée, et permettant une meilleure identification de l'utilisateur, réside dans l'utilisation d'une carte à puce, appartenant à l'utilisateur ; la carte à puce est insérée dans un lecteur spécifique, et l'interface utilisateur de gestion de session invite alors l'utilisateur à saisir un code PIN pour être identifié. Une solution encore plus sécurisée et assurant une encore meilleure traçabilité des utilisateurs (les cartes à puce pouvant être dérobées ou prêtées), réside dans l'utilisation de systèmes biométriques : l'utilisateur s'identifie au moyen par exemple d'une empreinte digitale.

Si des perfectionnements sont donc apparus en termes de sécurisation d'accès aux machines et de traçabilité des utilisateurs, il demeure un problème de facilité d'identification pour les utilisateurs. En effet, quelle que soit la nature de l'opération d'identification (saisie d'un identifiant et d'un mot de passe, utilisation d'une carte à puce ou d'un système biométrique), il est nécessaire pour l'utilisateur de procéder à l'opération d'identification sur l'ensemble des postes qu'il souhaite utiliser. Ces opérations d'identification étant au moins quotidienne, leur caractère répété devient rapidement fastidieux pour l'utilisateur, et entraine une perte de temps inutile. Par ailleurs, l'utilisation de cartes à puces et/ou de systèmes biométriques peut nécessiter l'installation de lecteurs ou de capteurs spécifiques sur chacune des machines destinées à être utilisées par l'utilisateur. Ce caractère fastidieux lié aux opérations d'identification se retrouve par ailleurs pour d'autres opérations exécutées au moyen de l'interface utilisateur de gestion de session ; c'est notamment le cas pour les opérations de verrouillage de session, de fermeture de session, ou encore de réinitialisation (reboot) de session.

Par ailleurs, le document US2003/229900 décrit une interface utilisateur pour parcourir (ou explorer) des informations sous forme d'images, sons et vidéos (« hypermédia ») simultanément sur plusieurs ensembles de dispositifs, tels qu'un ordinateur et une TV connectée, et des procédés de gestion de cette interface. L'un de ces procédés concerne le transfert d'une session d'exploration A1 d'un premier système A vers un second système B. Une telle session peut être entendue comme une tâche ou un programme de navigation. Le transfert s'effectue comme suit :
- sur requête de l'utilisateur, un importateur/exportateur de session du système A créé un enregistrement de l'état de la session A1 en cours ; puis
- cet enregistrement est transféré au système B, par l'intermédiaire de son propre importateur/exportateur de session ; et enfin
- l'importateur/exportateur de session du système B utilise les informations de l'enregistrement, pour activer sur le système B une session A1', équivalente à la session A1.

### DESCRIPTION GENERALE DE L'INVENTION

Le procédé et le dispositif selon l'invention proposent une solution aux problèmes qui viennent d'être exposés. Dans l'invention, on propose une solution pour qu'un utilisateur d'une pluralité de machines n'ait pas à répéter certaines opérations de gestion de session : il suffit, grâce à l'invention, qu'il exécute une unique fois une opération sur un premier poste pour que l'opération en question soit considérée comme effectuée sur l'ensemble des autres postes sur lesquels l'utilisateur est amené à travailler. L'opération peut par exemple être une opération d'identification, une opération de fermeture de session, une opération de verrouillage de session, ou encore une opération de réinitialisation d'une ou plusieurs machines. Avantageusement, dans l'invention, on apporte un degré de sécurisation important de ces opérations, et on assure la traçabilité des utilisateurs de manière optimale, pour respectivement limiter l'accès aux machines à des utilisateurs autorisés, et pour éventuellement conserver des informations relatives à l'identité de l'utilisateur. A cet effet, on prévoit notamment dans l'invention de définir des ensembles de machines qui sont aptes à communiquer entre elles pour que des événements de gestion de session exécutés au niveau d'une première machine se propagent vers les autres machines de la pluralité de machines considérée.

L'invention concerne donc essentiellement un procédé de propagation d'événements de gestion de session entre une pluralité de machines formant une grappe de machines, caractérisé en ce que le procédé comporte les différentes étapes suivantes :
- générer, au moyen d'une interface utilisateur de gestion de session, un événement de gestion de session sur une première machine de la grappe de machines ;
- détecter au moyen d'un greffon de l'interface utilisateur de gestion de session de la première machine l'événement généré ;
- transmettre, depuis le greffon de l'interface utilisateur de gestion de session de la première machine vers un premier service de sécurité, associé à la première machine, un ensemble d'informations spécifiques associées à l'événement détecté ;
- déterminer au moyen du premier service de sécurité un ensemble de machines cibles, chacune des machines cibles étant associée à un service de sécurité cible qui lui est propre ; les machines cibles déterminées sont les machines constituant la grappe de machines à laquelle appartient la première machine ;
- transmettre les informations spécifiques depuis le premier service de sécurité vers les services de sécurité cibles associés aux machines cibles ;
- traiter les informations spécifiques, au niveau de chaque service de sécurité cible des machines cibles ayant reçu lesdites informations spécifiques, pour exécuter sur chaque machine cible ayant reçu lesdites informations spécifiques l'événement de gestion de session généré sur la première machine de la grappe de machines.

Par machine, on entend tout matériel informatique comprenant une interface utilisateur de gestion de session par laquelle un utilisateur peut s'authentifier avec un identifiant et un mot de passe. Dans des exemples non limitatifs, une machine peut être un poste de travail individuel ou un serveur.

Par service de sécurité, on désigne une tâche de fond qui fonctionne de façon indépendante d'une session utilisateur, c'est-à-dire même en l'absence d'une session utilisateur. Ainsi, un service de sécurité, du fait de son indépendance vis-à vis d'une session utilisateur, peut continuer à fonctionner même lorsque une interface utilisateur de gestion de session, utilisée sur la machine associée au service de sécurité considéré, n'est plus active, comme c'est le cas avec certains systèmes d'exploitation.

Par événement de gestion, on désigne une des quatre opérations réalisables au moyen d'une interface utilisateur de gestion de session, à savoir une opération d'identification - notamment en vue d'une ouverture de session de travail, une opération de fermeture de session, une opération de verrouillage de session et une opération de réinitialisation. On distingue une opération de verrouillage de session d'une opération de fermeture de session dans la mesure où pour une opération de verrouillage de session, la session demeure ouverte et active, les applications fonctionnant continuent leur tâche, mais aucun utilisateur ne peut intervenir via l'interface homme machine qui est verrouillée. En revanche, suite à une opération de fermeture de session, la session est arrêtée, toutes les applications qui étaient en cours d'exécution étant stoppées ; l'utilisateur est alors déconnecté, et la session en cours est détruite.

Le procédé selon l'invention peut comporter, en plus des étapes principales qui viennent d'être mentionnées dans le paragraphe précédent, une ou plusieurs caractéristiques supplémentaires parmi les suivantes:
- l'étape de transmission des informations spécifiques depuis le premier service de sécurité vers les services de sécurité cibles associés aux machines cibles est réalisée de manière répétée, notamment de manière périodique.
- l'étape de transmission des informations spécifiques depuis le premier service de sécurité vers les services de sécurité propres associés aux machines cibles est réalisée après chiffrage des informations spécifiques.
- l'étape de détermination de l'ensemble de machines cibles parmi les machines de la grappe de machines est réalisée au moyen d'un annuaire accessible par le service de sécurité, ledit annuaire comportant la liste de l'ensemble des machines de la grappe.

- le procédé comporte l'étape supplémentaire consistant à modifier la grappe de machines par une opération de mise à jour de l'annuaire.
- le procédé comporte l'étape supplémentaire consistant à, pour chaque machine inactive de la grappe de machines n'ayant pas reçu de signal depuis une autre machine de la grappe pendant une durée préalablement déterminée, provoquer une fermeture de session ou un verrouillage de ladite machine considérée.
- la transmission, depuis le greffon de l'interface utilisateur de gestion de session vers le premier service de sécurité est réalisée selon un protocole de type TCP/IP ou tout autre protocole de type client/serveur.
- l'étape de transmission des informations spécifiques depuis le premier service de sécurité vers les services de sécurité cibles associés aux machines cibles est réalisée selon un protocole de type TCP/IP ou tout autre protocole de type client/serveur.
- l'événement généré est un événement d'authentification ou de déverrouillage, suite à la génération par un utilisateur d'un identifiant et d'un mot de passe, ledit procédé comportant alors les différentes étapes suivantes :
- vérifier, au moyen de l'interface de gestion de session, une concordance entre l'identité et le mot de passe ;
- si la concordance entre l'identité et le mot de passe est avérée, procéder, au moyen du greffon de l'interface utilisateur de gestion de session de la première machine, à la détection de l'événement généré ;
- transmettre, depuis le greffon de l'interface utilisateur de gestion de session de la première machine vers le premier service de sécurité, associé à la première machine, l'ensemble d'informations spécifiques comportant au moins l'identité et le mot de passe généré par l'utilisateur.
- l'étape d'exécution sur chaque machine cible de l'événement d'authentification comporte, pour chaque machine cible ayant reçu l'ensemble d'informations spécifiques, les différentes étapes suivantes :
- émettre, depuis le service de sécurité cible de la machine cible considérée, une notification d'ouverture, ou de déverrouillage, de l'interface utilisateur de gestion de session de ladite machine cible considérée;
- émettre, depuis un greffon de l'interface utilisateur de gestion de session de la machine cible considérée, vers le service de sécurité cible de la machine cible considérée, une requête TCP/IP ou une requête selon un protocole équivalent ;
- communiquer depuis le service de sécurité vers le greffon de la machine cible considérée, selon le protocole TCP/IP ou selon un protocole équivalent, les informations d'identification et de mot de passe ;
- ouvrir, ou déverrouiller, sur la machine cible considérée une session de travail.
- l'événement généré est un événement de verrouillage de session ou de fermeture de session, suite à la génération par un utilisateur d'une commande respectivement de verrouillage ou de fermeture, l'étape de traitement des informations spécifiques au niveau de chaque service de sécurité cible des machines cibles comportant alors les différentes opérations suivantes :
- émettre, depuis le service de sécurité cible de chaque machine cible considérée, une notification de verrouillage ou de fermeture d'une session de travail préalablement ouverte sur la machine considérée ;
- verrouiller ou fermer la machine considérée.
- l'événement généré est un événement de réinitialisation de session, suite à la génération par un utilisateur d'une commande de réinitialisation, l'étape de traitement des informations spécifiques au niveau de chaque service de sécurité cible des machines cibles comportant alors l'opération consistant à exécuter une application de réinitialisation de chaque machine cible ayant reçu les informations spécifiques associées à l'événement de réinitialisation.
- le procédé comporte l'étape supplémentaire, préalablement à l'étape de transmission, depuis le greffon de l'interface utilisateur de gestion de session de la première machine vers le premier service de sécurité, de l'ensemble d'informations spécifiques associées à l'événement de réinitialisation, consistant à sélectionner un mode de réinitialisation, ledit mode de réinitialisation étant soit local, soit général; si le mode local est sélectionné, seule la première machine est réinitialisée ; si le mode général est sélectionné, l'ensemble des machines de la grappe des machines sont réinitialisées.
- le procédé comporte, pour exécuter une application sécurisée sur la machine cible, les étapes supplémentaires consistant à, la première machine étant équipée d'outils d'identification sécurisée :
- réaliser une opération d'identification sur la première machine au moyen des outils d'identification sécurisée ;
- dans le cas d'une identification validée, transmettre un message de validation de la première machine vers la deuxième machine, ledit message de validation autorisant l'ouverture de l'application sécurisée.
- les outils d'identification étant du type carte à puce/lecteur de carte à puce, le procédé comporte les différentes étapes consistant à, préalablement à l'opération d'identification sur la première machine :
- saisir un code PIN sur la deuxième machine;
- transmettre le code PIN de la deuxième machine vers la première machine.
- les outils d'identification étant du type capteur biométrique, le procédé comporte l'étape consistant à, préalablement à l'opération d'identification sur la première machine, ouvrir une fenêtre de dialogue sur la deuxième machine invitant un utilisateur à s'identifier sur la première machine.

Les différentes caractéristiques supplémentaires du procédé selon l'invention, dans la mesure où elles ne s'excluent pas mutuellement, sont combinées selon toutes les possibilités d'association pour aboutir à différents exemples de mise en oeuvre de l'invention.

L'invention s'étend également à un ensemble de machines aptes à mettre en oeuvre le procédé selon l'invention, les différentes machines étant équipées de tout moyen nécessaire pour réaliser les différentes opérations nécessaires à la mise en oeuvre du procédé selon l'invention.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, une représentation schématique d'un exemple de mise en oeuvre du procédé selon l'invention avec un événement de gestion de session de type authentification ;
- à la figure 2, une représentation schématique d'un exemple de mise en oeuvre du procédé selon l'invention avec un événement de gestion de session de type verrouillage de session ou fermeture de session ;
- à la figure 3, une représentation schématique d'un exemple de mise en oeuvre du procédé selon l'invention avec un événement de gestion de session de type réinitialisation ;
- à la figure 4, une représentation schématique d'un exemple de mise en oeuvre du procédé selon l'invention dans lequel des moyens d'identification sont déportés.

### DESCRIPTION DES FORMES DE REALISATION PREFEREES DE L'INVENTION

Les éléments apparaissant sur différentes figures auront conservé, sauf précision contraire, les mêmes références.

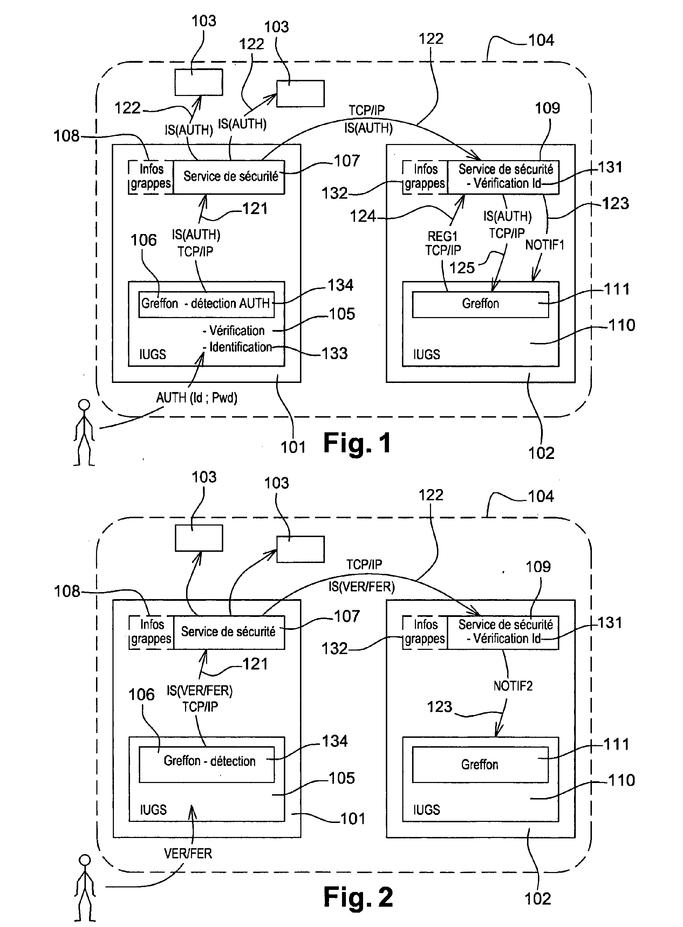

La figure 1 représente schématiquement un premier exemple de mise en oeuvre du procédé selon l'invention. Sur cette figure, une première machine 101, une deuxième machine 102 et différentes autres machines 103. L'ensemble des machines représentées constitue une grappe de machines 104. Typiquement une grappe de machines est constituée de quatre à six machines ; mais dans certaines applications de l'invention, par exemple quand les machines considérées constituent une grappe de machines déployées dans un magasin dans lequel différents postes de conseillers sont répartis sur la surface du magasin, la grappe de machines peut être constituée d'un nombre plus important de machines.

Dans l'exemple de la figure 1, comme dans les autres exemples qui seront détaillés au moyen des autres figures, seuls les fonctionnements de la première machine 101 et de la deuxième 102 sont détaillés ; le fonctionnement des autres machines 103 de la grappe 104 étant similaire au fonctionnement de la deuxième machine 102. On distingue, dans leur fonctionnement pour la mise en oeuvre du procédé selon l'invention, la première machine 101 des autres machines de la grappe 104, en désignant ces autres machines comme des machines cibles.

La première machine 101 se distingue des autres machines de la grappe 104, et notamment de la machine cible 102, dans la seule mesure où c'est sur cette machine qu'est générée, notamment par un utilisateur, un événement de gestion de session via une interface utilisateur 105 de gestion de session (appellation abrégée par le sigle IUGS), parfois simplement désignée comme interface utilisateur. Mais dans le cadre de la mise en oeuvre du procédé selon l'invention, le fonctionnement des différentes machines de la grappe est parfaitement permutable : la machine cible 102 peut tout à fait être utilisée en tant que première machine 101 lorsque l'événement de gestion de session est directement (c'est-à-dire pas par l'intermédiaire d'une autre machine de la grappe) généré par un utilisateur sur ladite machine cible 102. Dans un tel cas, la première machine 101 devient alors une des machines cibles de la grappe de machines 104.

Dans l'exemple illustré au moyen de la figure 1, l'événement considéré est un événement AUTH de type authentification - ou identification - d'un utilisateur. Le fonctionnement qui va être décrit est similaire au cas où l'événement considéré est du type déverrouillage de session. L'utilisateur génère un tel événement d'identification, ou de deverrouillage, soit par l'entrée directe sur un clavier associé à la première machine d'un identifiant Id et d'un mot de passe Pwd, soit par une interface matérielle par exemple de type lecteur de carte à puce ou capteur biométrique ; dans tous les cas, l'étape de génération d'événement de gestion de session de type identification ou de déverrouillage aboutit à la génération de l'identifiant Id et du mot de passe Pwd, ces deux données lorsqu'elles ne sont pas saisies manuellement, étant associées dans une table de correspondance non représentée mémorisée dans la première machine à une carte à puce ou à une information biométrique associée à un utilisateur.

Une opération de vérification 133 de correspondance entre l'identifiant et le mot de passe est ensuite réalisée par l'interface utilisateur 105 dans une étape suivante. Si la correspondance est correcte, un greffon 106 (terme français du terme anglais "plug-in" fréquemment utilisé) de l'interface utilisateur 105 réalise une détection dudit événement de gestion, et récupère des informations spécifiques IS associées à l'événement détecté. Dans le premier exemple illustré, les informations spécifiques IS(AUTH) comportent au moins l'identifiant Id et le mot de passe Pwd. Dans d'autres exemples qui seront détaillés ultérieurement, les informations spécifiques comportent avantageusement une commande apte à intervenir sur une interface utilisateur de gestion de session. Le greffon 106 réalise alors une transmission 121 des informations spécifiques IS(AUTH) vers un premier service de sécurité 107 associé à la première machine 101. La transmission 121 est réalisée en respectant un protocole de type TCP/IP, ou tout autre protocole de type client/ serveur équivalent, par exemple de type UDP ou autre, tels que par exemple SPX ou TCAP.

Le service de sécurité 107 accède alors à un annuaire 108 dans lequel il prend connaissance de l'identité des machines cibles de la grappe de machines. L'annuaire 108 comporte avantageusement, pour chaque machine référencée, au moins une des informations suivantes : identifiant unique (Globally Unique Identifier en anglais), un nom, attribué par exemple par un administrateur, et son adresse IP. Avantageusement, l'annuaire 108 comporte, pour chaque machine référencée, ces trois informations. Le premier service de sécurité 107 procède alors à une transmission 122 aux machines cibles des informations spécifiques IS(AUTH). La transmission est là aussi réalisée selon un protocole de type TCP/IP ou tout autre protocole équivalent de type client/serveur. Avantageusement, préalablement à cette transmission, comme dans les autres exemples qui seront décrits ultérieurement, on procède, par mesure de sécurité, à un chiffrage des informations spécifiques transmises.

Chaque machine cible, dans la mesure où elle est reliée au réseau constitué par la grappe de machines 104, la liaison pouvant être de nature quelconque, reçoit les informations spécifiques IS au niveau d'un service de sécurité 109 qui lui est propre, désigné pour chaque machine cible par l'expression service de sécurité cible. Si les informations spécifiques IS(AUTH) avaient été préalablement chiffrées, on procède au déchiffrage de celles-ci.

Dans cet exemple, comme dans les autres exemples de mise en oeuvre qui seront décrits ultérieurement, si une machine cible de la grappe de machines 104 ne reçoit pas les informations spécifiques, par exemple parce que elle n'est pas reliée à la première machine 101, elle recevra lesdites informations spécifiques dès que la liaison sera rétablie. A cet effet, on prévoit que le premier service de sécurité 107 envoie périodiquement les informations spécifiques vers l'ensemble des machines cibles de la grappe de machines 104.

Une fois les informations spécifiques IS(AUTH) reçues par les machines cibles, notamment par la machine cible 102, le service de sécurité cible 109 associé à chacune des machines cibles procède à une opération de vérification 131 d'appartenance de la machine depuis laquelle sont reçues les informations spécifiques à la grappe de machines 104. A cet effet, le service de sécurité 109 accède à un annuaire 132 recensant l'ensemble des machines de la grappe de machines 104. Ainsi, l'annuaire 132 comporte avantageusement, pour chaque machine référencée, au moins une des informations suivantes : identifiant unique (Globally Unique Identifier en anglais), un nom, attribué par exemple par un administrateur, et son adresse IP. Avantageusement, l'annuaire 132 comporte, pour chaque machine référencée, ces trois informations. Une telle vérification permet de se protéger contre des messages adressés par erreur ou de manière malveillante à une machine cible de la grappe de machines 104 depuis une machine non autorisée. Cette étape de procédé est avantageusement reproduite dans les différents exemples de mise en oeuvre du procédé selon l'invention qui seront décrits par la suite.

Une fois la vérification réalisée, le service de sécurité 109 réalise une transmission 123 d'une notification NOTIF1 de demande d'ouverture ou de déverrouillage de session.

D'une manière générale, une notification est un message applicatif qui est défini en fonction de l'interface utilisateur de gestion de session de la machine dans laquelle est émise la notification considérée. Ainsi, par exemple, dans le cas d'une interface utilisateur gestion de session Windows™, une notification est un événement généré par Windows™. Dans un autre exemple, dans le cas d'une interface utilisateur gestion de session Linux™, une notification est un événement généré par Linux™.

La notification NOTIF1 émise provoque l'ouverture d'une interface utilisateur cible 110 de gestion de session. Un greffon 111, dit greffon cible, de l'interface utilisateur cible 110 de gestion de session procède alors à une transmission 124 d'une requête REQ1 de type TCP/IP, ou fonctionnant selon tout protocole équivalent de type client/serveur, vers le service de sécurité cible 109 pour provoquer un envoi 125 depuis le service de sécurité cible 109 vers le greffon cible 111 les informations spécifiques IS(AUTH), et notamment l'identifiant Id et du mot de passe Pwd.

Une session de travail est ainsi ouverte ou déverrouillée sur la machine cible 102, et sur toute autre machine 103 de la grappe de machines 104 ayant effectivement reçu les informations spécifiques IS(AUTH).

On a mentionné dans l'exemple qui vient d'être décrit, l'utilisation d'annuaires 108 et 132 qui permettent de déterminer quelles sont les machines appartenant à une grappe considérée. Ces annuaires sont accessibles par les services de sécurité des machines. D'une façon générale dans les différents exemples de mise en oeuvre du procédé selon l'invention, ces annuaires sont soit mémorisés dans chacune des machines, éventuellement après avoir été transmis par une entité distante de gestion, soit mémorisés dans une entité distante de gestion, les services de sécurité accédant alors à la dite entité de gestion pour consulter les annuaires. Dans cette deuxième possibilité, on peut considérer qu'il existe un unique annuaire pour une grappe de machines. Avantageusement, un utilisateur d'une machine d'une grappe de machines donnée peut faire évoluer l'annuaire en ajoutant, ou éventuellement en retirant, certaines machines de la grappe à laquelle appartient la machine qu'il utilise. A cet effet, l'utilisateur accède à l'annuaire mémorisé dans l'unité distante de gestion et modifie la liste des machines de la grappe, avantageusement en fonction de droits qui ont été préalablement accordés à l'utilisateur ; ce dernier ne pouvant par exemple ajouter à une grappe de machines que des machines figurant sur une liste de machines disponibles.

Dans un perfectionnement du procédé selon l'invention, on prévoit que pour chaque machine inactive de la grappe de machines 104 n'ayant pas reçu de signal depuis une autre machine de la grappe de machines 104 pendant une durée préalablement déterminée, de provoquer une fermeture de session ou un verrouillage de la session de travail en cours sur ladite machine considérée. Par machine inactive, on désigne une machine sur laquelle l'utilisateur n'est pas directement intervenu par l'intermédiaire de l'interface homme-machine classique (clavier, souris...). A cet effet, on prévoit l'utilisation d'un compte à rebours dans chaque machine qui mesure une durée d'inactivité de la machine considérée, la compte à rebours étant réinitialisé dès que la machine considérée reçoit des informations depuis une autre machine de la grappe de machines, ou dès que l'utilisateur utilise directement la machine considérée.

La figure 2 représente schématiquement un deuxième exemple de mise en oeuvre du procédé selon l'invention. Dans cet exemple, l'événement considéré est un événement VER de verrouillage de session utilisateur, ou un événement FER de fermeture de session utilisateur. L'utilisateur génère un tel événement de verrouillage ou de fermeture en utilisant l'interface utilisateur de gestion de session 105.

Le greffon 106 de l'interface utilisateur 105 procède là aussi à la détection 134 dudit événement de verrouillage ou de fermeture, et récupère des informations spécifiques IS(VER/FER) associées à l'événement détecté. Dans le deuxième exemple illustré, les informations spécifiques comportent au moins une instruction de commande de verrouillage ou de fermeture de session. Le greffon 106 transmet alors les informations spécifiques IS(VER/FER) vers le premier service de sécurité 107 associé à la première machine 101. La transmission 121 est réalisée en respectant un protocole de type TCP/IP, ou tout autre protocole de type client/ serveur équivalent.

Le service de sécurité 107 accède alors à l'annuaire 108 dans lequel il prend connaissance de l'identité des machines cibles de la grappe de machines 104. Le premier service de sécurité 107 réalise alors la transmission 122 vers les machines cibles des informations spécifiques IS(VER/FER). La transmission 122 est là aussi réalisée selon un protocole de type TCP/IP ou tout autre protocole équivalent de type client/serveur.

Chaque machine cible, dans la mesure où elle est reliée au réseau constitué par la grappe de machines 104, la liaison pouvant être de nature quelconque, reçoit les informations spécifiques IS(VER/FER) au niveau du service de sécurité 109 qui lui est propre.

Une fois les informations spécifiques IS(VER/FER) reçues par les machines cibles, notamment par la machine cible 102, le service de sécurité cible 109 associé à chacune des machines cibles procède à la transmission 123 d'une notification NOTIF2 de demande de verrouillage ou de fermeture de session. La transmission 123 est avantageusement précédée de l'opération de vérification 131 d'appartenance de la machine depuis laquelle sont reçues les informations spécifiques à la grappe de machines 104.

La notification NOTIF2 est alors émise soit vers le greffon 111 de l'interface utilisateur cible 110 de gestion de session si elle est présente (comme c'est le cas par exemple pour les systèmes d'exploitation Windows XP™ ou Linux™), comme illustré sur la figure 2, soit vers une application spécifique apte à provoquer la fermeture ou le verrouillage de la session de travail (come c'est le cas par exemple pour le système d'exploitation Windows Vista™).

La session de travail est ainsi verrouillée ou fermée.

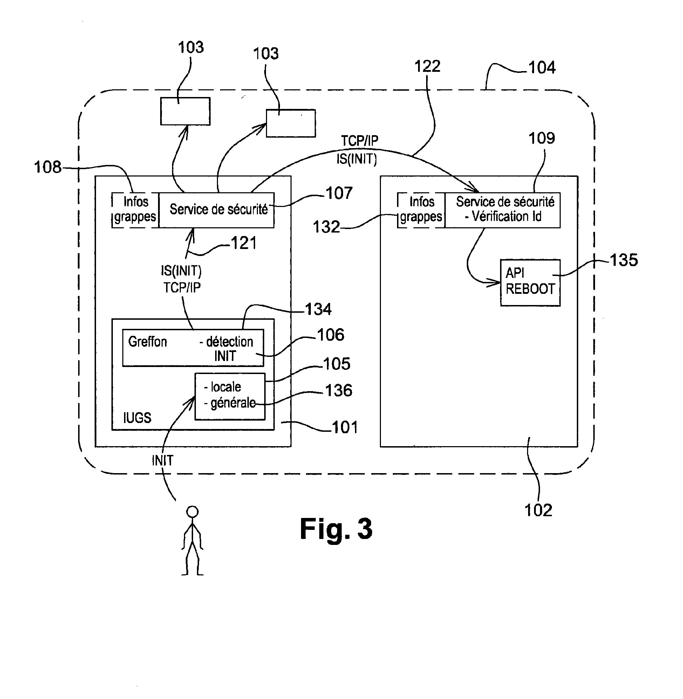

La figure 3 représente schématiquement un troisième exemple de mise en oeuvre du procédé selon l'invention. Dans cet exemple, l'événement considéré est un événement INIT de réinitialisation de session utilisateur. L'utilisateur génère un tel événement de réinitialisation en utilisant l'interface utilisateur de gestion de session 105.

Avantageusement, dans l'invention, on prévoit que l'interface utilisateur de gestion de session recevant l'événement de réinitialisation INIT propose à l'utilisateur, en déclenchant une application 136, de choisir entre une opération de réinitialisation locale ou une opération de réinitialisation générale. Dans le premier cas, seule la première machine est réinitialisée. Dans le second cas, l'événement de réinitialisation est destiné à se propager, selon l'invention, vers l'ensemble des machines cibles de la grappe de machines 104 comme décrit ci-dessous.

Ainsi, si le mode général de réinitialisation est choisi par l'utilisateur, le greffon 106 de l'interface utilisateur 105 procède là aussi à la détection 134 dudit événement de réinitialisation ou de fermeture, et récupère des informations spécifiques IS(INIT) associées à l'événement détecté.

Dans le troisième exemple illustré, les informations spécifiques comportent au moins une instruction de commande de réinitialisation de session. Le greffon 106 transmet alors les informations spécifiques IS(INIT) vers le premier service de sécurité 107 associé à la première machine 101. La transmission 121 est réalisée en respectant un protocole de type TCP/IP, ou tout autre protocole de type client/ serveur équivalent.

Le service de sécurité 107 accède alors à l'annuaire 108 dans lequel il prend connaissance de l'identité des machines cibles de la grappe de machines 104. Le premier service de sécurité 107 réalise alors la transmission 122 vers les machines cibles des informations spécifiques IS(INIT). La transmission 122 est là aussi réalisée selon un protocole de type TCP/IP ou tout autre protocole équivalent de type client/serveur.

Chaque machine cible, dans la mesure où elle est reliée au réseau constitué par la grappe de machines 104, la liaison pouvant être de nature quelconque, reçoit les informations spécifiques IS(INIT) au niveau du service de sécurité 109 qui lui est propre.

Une fois les informations spécifiques IS(INIT) reçues par les machines cibles, notamment par la machine cible 102, le service de sécurité cible 109 associé à chacune des machines cibles procède à l'exécution d'une interface de programmation applicative 135 spécifique, ou API (pour Application Programming Interface en langue anglaise) au sein de la machine cible considérée, ladite API, dite API REBOOT, contrôlant l'opération de réinitialisation souhaitée.

L'exécution de l'API 135 est avantageusement précédée de l'opération de vérification 131 d'appartenance de la machine depuis laquelle sont reçues les informations spécifiques à la grappe de machines 104

La session de travail est ainsi réinitialisée sur chaque machine cible ayant exécutée l'API 135.

Lorsqu'une session de travail est ouverte sur une machine, désignée comme machine cible, l'interface de gestion de session, essentiellement à partir des informations d'authentification (identifiant et mot de passe) dont elle dispose, provoque l'ouverture de différentes applications, par exemple des messageries électroniques. Certaines de ces applications sont des applications sécurisées, et, alors même que les informations d'authentification ont été communiquées à l'interface utilisateur de gestion de session de la machine cible, ces applications sécurisées nécessitent une identification supplémentaire en fournissant de nouveau lesdites informations d'authentification.

Une difficulté se pose alors lorsqu'on utilise des outils d'identification sécurisée, de type lecteur de carte à puce ou installation biométrique, et que ces outils d'identification sont installés sur une première machine, apte à communiquer avec la machine cible considérée. En effet, on ne dispose pas, sur la machine cible considérée, des outils d'identification sécurisés ; leur installation sur la machine cible considérée serait trop coûteuse.

Une solution pour permettre l'identification supplémentaire sur la machine cible sans avoir à l'équiper des outils d'identification sécurisés est de procéder à une redirection de port USB. Une telle redirection consiste à prendre le contrôle à distance d'un périphérique USB (comme par exemple un lecteur de carte à puce). Mais une telle opération entraîne la déconnexion en local du périphérique et par conséquent la fermeture ou le verrouillage de la session de travail de la première machine, ce qui est handicapant, notamment dans les cas de la mise en oeuvre du procédé de propagation d'événements de gestion qui vient d'être décrite.

Aussi, dans l'invention, on propose une solution pour réaliser une procédure d'identification supplémentaire sur une machine cible permettant de ne provoquer ni la fermeture ni le verrouillage de la session de travail ouverte sur la première machine équipée des outils d'identification sécurisée.

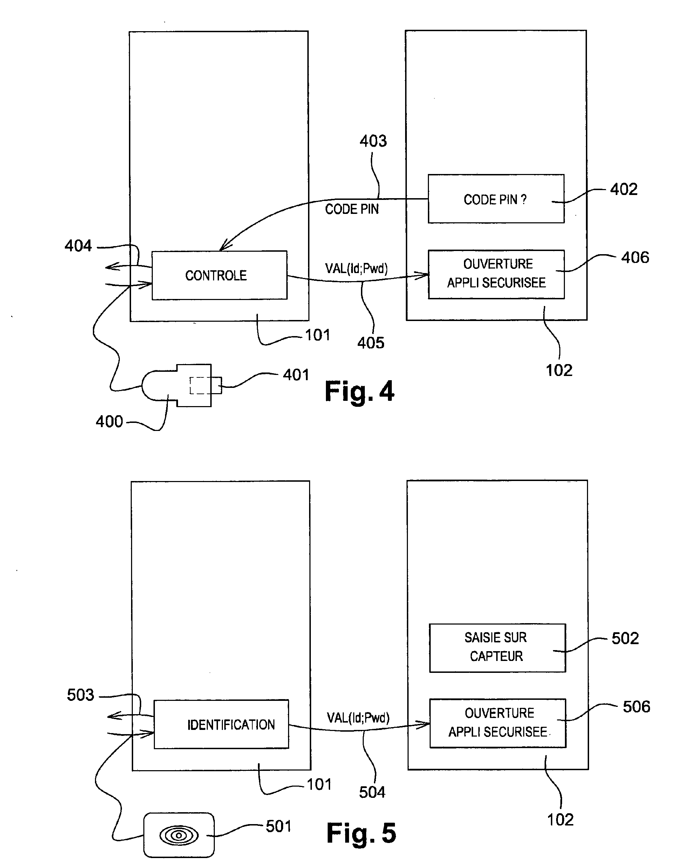

La solution proposée est avantageusement mise en oeuvre dans le contexte de la propagation d'événements de gestion qui a été décrit jusqu'à présent, notamment lorsque l'événement de gestion considéré est un événement. Mais d'une façon plus générale, elle peut aussi être mise en oeuvre dans un contexte moins élaboré, dans lequel une première machine et une deuxième machine sont aptes à échanger des informations entre elles. C'est dans ce contexte général que la solution est décrite en référence aux figures 4 et 5.

Sur ces figures, on a représenté une première machine et une machine cible. Comme représenté sur ces figures, la première machine peut par exemple, mais pas nécessairement, être du type de la première machine 101, avec notamment un greffon associé à l'interface utilisateur de gestion de session, et un service de sécurité 107. La deuxième machine peut être par exemple, mais pas nécessairement, du type de la machine cible 102, avec notamment le service de sécurité cible 109.

La première machine est équipée d'outils d'identification sécurisée.

Sur la figure 4, les outils d'identification sécurisés sont du type carte lecteur de carte à puce 400 et carte à puce associée 401. Avec de tels outils sécurisés, lorsqu'une demande d'identification supplémentaire est demandée au niveau de la machine cible 102 par une application sécurisée 406, machine cible 102 dont une session de travail a préalablement été ouverte suite à la réception depuis la première machine 101, une fenêtre de dialogue 402 est ouverte dans laquelle l'utilisateur est invité à saisir un code PIN.

Une fois saisi, on réalise une transmission 403 du code PIN saisi vers la première machine 101. La transmission 403 est réalisée selon un protocole de type TCP/IP ou tout autre protocole de type client/serveur.

Une opération de contrôle 404 est alors mise en oeuvre pour vérifier la concordance entre le code PIN saisi et le code PIN de la carte à puce 401, en procédant à un dialogue avec la dite carte à puce 401. En cas de concordance, un message de validation VAL, comportant avantageusement l'identifiant Id et le mot de passe Pwd nécessaires à l'ouverture de l'application sécurisée sont communiqués à la machine cible 402 par une opération de transmission 405 La transmission est réalisée selon un protocole de type TCP/IP ou tout autre protocole de type client/serveur. L'application sécurisée 406 est alors ouverte.

Sur la figure 5, les outils d'identification sécurisés sont du type capteur biométrique 501. Avec de tels outils sécurisés, lorsqu'une demande d'identification supplémentaire est demandée au niveau de la machine cible 102 pour exécuter une application sécurisée 506 sur la machine cible 102 dont une session de travail a préalablement été ouverte suite à la réception depuis la première machine 101, une fenêtre de dialogue 502 est ouverte dans laquelle l'utilisateur est invité à intervenir sur le capteur biométrique 501 relié à la première machine 101.

L'utilisateur utilise donc le capteur biométrique 501 relié à la première machine 101 pour procéder à une identification 503. Une fois l'identification réalisée, on réalise une transmission 504 d'un message de validation VAL, comportant avantageusement l'identifiant Id et le mot de passe Pwd nécessaires à l'ouverture de l'application sécurisée considéré sur la machine cible 102. La transmission 504 est réalisée selon un protocole de type TCP/IP ou tout autre protocole de type client/serveur.

Dans un premier exemple de réalisation, la transmission 504 est réalisée à destination de l'ensemble des machines d'une grappe de machines à laquelle appartient la première machine 101. Dans cet exemple de réalisation, on prévoit par exemple que la première machine 101 accède à l'annuaire 108 mentionné dans des exemples de mise en oeuvre précédent. Dans un deuxième exemple de réalisation, la transmission 504 est réalisée uniquement à destination de la machine cible 102. A cet effet, la machine cible 102 a préalablement transmis à la première machine 101 des informations d'identification, permettant de lui adresser la transmission 504.

L'application sécurisée 506 est alors ouverte sur la machine cible 102.

Un tel mécanisme permet ainsi de réaliser une identification sécurisée au niveau de machines non équipées d'outils d'identification sécurisée, notamment au niveau de machines appartenant à une grappe de machines telle que définie dans le contexte de l'invention.

## Revendications

1. Procédé de propagation d'événements de gestion de session entre une pluralité de machines (101 ; 102 ; 103) formant une grappe de machines (104), comprenant les différentes étapes suivantes :
- générer, au moyen d'une interface (105) utilisateur de gestion de session, un événement de gestion de session (AUTH, INIT, VER, FER) sur une première machine (101) de la grappe de machines (104) ;
- détecter (134) au moyen d'un greffon (106) de l'interface (105) utilisateur de gestion de session de la première machine (101) l'événement (AUTH, INIT, VER, FER) généré ;
- transmettre (121), depuis le greffon (106) de l'interface (105) utilisateur de gestion de session de la première machine (101) vers un premier service de sécurité (107), associé à la première machine (101), un ensemble d'informations spécifiques (IS) associées à l'événement détecté ;
- déterminer au moyen du premier service de sécurité (107) un ensemble de machines cibles, chacune des machines cibles étant associée à un service de sécurité cible (109) qui lui est propre ;
- transmettre (122) les informations spécifiques (IS) depuis le premier service de sécurité (107) vers les services de sécurité cibles (109) associés aux machines cibles ;
- traiter les informations spécifiques, au niveau de chaque service de sécurité cible (109) des machines cibles ayant reçu lesdites informations spécifiques (IS), pour exécuter sur chaque machine cible ayant reçu lesdites informations spécifiques (IS) l'événement de gestion de session (AUTH, INIT, VER, FER) généré sur la première machine (101) de la grappe de machines (104).

2. Procédé selon la revendication précédente, dans lequel l'étape de transmission (122) des informations spécifiques depuis le premier service de sécurité (107) vers les services de sécurité cibles (109) associés aux machines cibles est réalisée de manière répétée, notamment de manière périodique.

3. Procédé selon l'une quelconque des revendications précédentes, dans lequel l'étape de transmission (122) des informations spécifiques depuis le premier service de sécurité (107) vers les services de sécurité propres (109) associés aux machines cibles est réalisée après chiffrage des informations spécifiques.

4. Procédé selon l'une quelconque des revendications précédentes, dans lequel l'étape de détermination de l'ensemble de machines cibles parmi les machines de la grappe de machines (104) est réalisée au moyen d'un annuaire (108) accessible par le premier service de sécurité (107), ledit annuaire (108) comportant la liste de l'ensemble des machines de la grappe de machines (104).

5. Procédé selon la revendication précédente, comportant l'étape supplémentaire consistant à modifier la grappe de machines par une opération de mise à jour de l'annuaire.

6. Procédé selon l'une quelconque des revendications précédentes, comportant l'étape supplémentaire consistant à, pour chaque machine inactive de la grappe de machines n'ayant pas reçu de signal depuis une autre machine de la grappe pendant une durée préalablement déterminée, provoquer une fermeture de session ou un verrouillage de ladite machine considérée.

7. Procédé selon l'une quelconque des revendications précédentes, dans lequel la transmission (121), depuis le greffon (106) de l'interface (105) utilisateur de gestion de session vers le premier service de sécurité (107) est réalisée selon un protocole de type TCP/IP ou tout autre protocole de type client/serveur.

8. Procédé selon l'une au moins des revendications précédentes, dans lequel l'étape de transmission (122) des informations spécifiques (IS) depuis le premier service de sécurité (107) vers les services de sécurité cibles (109) associés aux machines cibles est réalisée selon un protocole de type TCP/IP ou tout autre protocole de type client/serveur.

9. Procédé selon l'une quelconque des revendications précédentes, dans lequel l'événement généré est un événement d'authentification (AUTH) ou de déverrouillage, suite à la génération par un utilisateur d'un identifiant (Id) et d'un mot de passe (Pwd), ledit procédé comportant alors les différentes étapes suivantes :
- vérifier (133), au moyen de l'interface (105) utilisateur de gestion de session, une concordance entre l'identité (Id) et le mot de passe (Pwd) ;
- si la concordance entre l'identité (Id) et le mot de passe (Pwd) est avérée, procéder, au moyen du greffon (106) de l'interface (105) utilisateur de gestion de session de la première machine (101), à la détection de l'événement généré;
- transmettre, depuis le greffon (106) de l'interface (105) utilisateur de gestion de session de la première machine (101) vers le premier service de sécurité (107), associé à la première machine (101), l'ensemble d'informations spécifiques (IS(AUTH)) comportant au moins l'identité et le mot de passe généré par l'utilisateur.

10. Procédé selon la revendication précédente, dans lequel l'étape d'exécution sur chaque machine cible de l'événement d'authentification ou de déverrouillage comporte, pour chaque machine cible ayant reçu l'ensemble d'informations spécifiques, les différentes étapes suivantes :
- émettre, depuis le service de sécurité cible de la machine cible considérée, une notification d'ouverture ou de déverrouillage de l'interface utilisateur de gestion de session de ladite machine cible considérée;
- émettre, depuis un greffon de l'interface utilisateur de gestion de session de la machine cible considérée, vers le service de sécurité cible de la machine cible considérée, une requête TCP/IP ou une requête selon un protocole équivalent ;
- communiquer depuis le service de sécurité vers le greffon de la machine cible considérée, selon le protocole TCP/IP ou selon un protocole équivalent, les informations d'identification et de mot de passe ;
- ouvrir sur, ou déverrouiller, la machine cible considérée une session de travail.

11. Procédé selon l'une quelconque des revendications précédentes, dans lequel l'événement généré est un événement de verrouillage de session ou de fermeture de session, suite à la génération par un utilisateur respectivement d'une commande de verrouillage ou de fermeture, l'étape de traitement des informations spécifiques au niveau de chaque service de sécurité cible des machines cibles comportant alors les différentes opérations suivantes :
- émettre, depuis le service de sécurité cible de chaque machine cible considérée, une notification de verrouillage ou de fermeture d'une session de travail préalablement ouverte sur la machine considérée ;
- verrouiller ou fermer la machine considérée.

12. Procédé selon l'une quelconque des revendications précédentes, dans lequel l'événement généré est un événement de réinitialisation de session, suite à la génération par un utilisateur d'une commande de réinitialisation, l'étape de traitement des informations spécifiques au niveau de chaque service de sécurité cible des machines cibles comportant alors l'opération consistant à exécuter une application de réinitialisation de chaque machine cible ayant reçu les informations spécifiques associées à l'événement de réinitialisation.

13. Procédé selon la revendication précédente, comportant l'étape supplémentaire, préalablement à l'étape de transmission, depuis le greffon de l'interface utilisateur de gestion de session de la première machine vers le premier service de sécurité, de l'ensemble d'informations spécifiques associées à l'événement de réinitialisation, consistant à sélectionner un mode de réinitialisation, ledit mode de réinitialisation étant soit local, soit général; si le mode local est sélectionné, seule la première machine est réinitialisée ; si le mode général est sélectionné, l'ensemble des machines de la grappe des machines sont réinitialisées.

14. Procédé selon l'une au moins des revendications précédentes, comportant, pour exécuter une application sécurisée (406 ; 506) sur la machine cible (102), les étapes supplémentaires consistant à, la première machine (101) étant équipée d'outils d'identification sécurisée :
- réaliser une opération d'identification sur la première machine (101) au moyen des outils d'identification sécurisée ;
- dans le cas d'une identification validée, transmettre (504) un message de validation (VAL) de la première machine (101) vers la deuxième machine (102), ledit message de validation autorisant l'ouverture de l'application sécurisée (406 ; 506).

15. Procédé selon la revendication précédente, dans lequel les outils d'identification sont du type carte à puce (401)/lecteur de carte à puce (400), le procédé comportant les différentes étapes consistant à, préalablement à l'opération d'identification sur la première machine :
- saisir un code PIN sur la deuxième machine (102) ;
- transmettre (403) le code PIN de la deuxième machine vers la première machine (101).

16. Procédé selon la revendication 14, dans lequel les outils d'identification sont du type capteur biométrique (501), le procédé comportant l'étape consistant à, préalablement à l'opération d'identification sur la première machine, ouvrir une fenêtre de dialogue (502) sur la deuxième machine (102) invitant un utilisateur à s'identifier sur la première machine (101).

## Patentansprüche

1. Verfahren zur Verbreitung von Sitzungsverwaltungsereignissen zwischen mehreren Geräten (101; 102; 103), die ein Gerätecluster (104) bilden, wobei es die nachfolgenden unterschiedlichen Schritte umfasst:
- Erzeugen eines Sitzungsverwaltungsereignisses (AUTH, INIT, VER, FER) auf einem ersten Gerät (101) aus dem Gerätecluster (104) mittels einer Sitzungsverwaltungsbenutzerschnittstelle (105),
- Erfassen (134) des erzeugten Ereignisses (AUTH, INIT, VER, FER) mittels eines Plug-ins (106) der Sitzungsverwaltungsbenutzerschnittstelle (105) des ersten Geräts (101),
- Übertragen (121) einer Gruppe dem erfassten Ereignis zugeordneter, spezifischer Informationen (IS) ausgehend von dem Plug-in (106) der Sitzungsverwaltungsbenutzerschnittstelle (105) des ersten Geräts (101) zu einem ersten Sicherheitsdienst (107),
- Bestimmen einer Gruppe von Zielgeräten mittels des ersten Sicherheitsdienstes (107), wobei jedes der Zielgeräte einem ihm zugehörigen Zielsicherheitsdienst (109) zugordnet ist,
- Übertragen (122) der spezifischen Informationen (IS) ausgehend von dem ersten Sicherheitsdienst (107) zu den den Zielgeräten zugeordneten Zielsicherheitsdiensten (109),
- Verarbeiten der spezifischen Informationen bei jedem Zielsicherheitsdienst (109) der Zielgeräte, die die spezifischen Informationen (IS) empfangen haben, um auf jedem Zielgerät, das die spezifischen Informationen (IS) empfangen hat, das auf dem ersten Gerät (101) aus dem Gerätecluster (104) erzeugte Sitzungsverwaltungsereignis (AUTH, INIT, VER, FER) auszuführen.

2. Verfahren nach dem vorhergehenden Anspruch, bei dem der Schritt (122) zur Übertragung der spezifischen Informationen ausgehend von dem ersten Sicherheitsdienst (107) zu den den Zielgeräten zugeordneten Zielsicherheitsdiensten (109) wiederholt, insbesondere periodisch durchgeführt wird.

3. Verfahren nach einem der vorhergehenden Ansprüche, bei dem der Schritt (122) zur Übertragung der spezifischen Informationen ausgehend von dem ersten Sicherheitsdienst (107) zu den zugehörigen Zielsicherheitsdiensten (109), die den Zielgeräten zugeordnet sind, nach der Verschlüsselung der spezifischen Informationen durchgeführt wird.

4. Verfahren nach einem der vorhergehenden Ansprüche, bei dem der Schritt zur Bestimmung der Gruppe von Zielgeräten aus den Geräten des Geräteclusters (104) mit einem Verzeichnis (108) durchgeführt wird, auf das der erste Sicherheitsdienst (107) Zugriff hat, wobei das Verzeichnis (108) die Liste mit allen Geräten aus dem Gerätecluster (104) umfasst.

5. Verfahren nach dem vorhergehenden Anspruch, das den zusätzlichen Schritt umfasst, der darin besteht, das Gerätecluster mit einer Operation zur Aktualisierung des Verzeichnisses zu ändern.

6. Verfahren nach einem der vorhergehenden Ansprüche, das den zusätzlichen Schritt umfasst, der darin besteht, für jedes inaktive Gerät des Geräteclusters, das über einen vorbestimmten Zeitraum kein Signal von einem anderen Gerät aus dem Cluster empfangen hat, eine Schließung der Sitzung oder eine Sperrung des betreffenden Geräts hervorzurufen.

7. Verfahren nach einem der vorhergehenden Ansprüche, bei dem die Übertragung (121) ausgehend von dem Plug-in (106) der Sitzungsverwaltungsbenutzerschnittstelle (105) zu dem ersten Sicherheitsdienst (107) gemäß einem TCP/IP-Protokoll oder jeglichem anderen Client/Server-Protokoll ausgeführt wird.

8. Verfahren nach mindestens einem der vorhergehenden Ansprüche, bei dem der Schritt zur Übertragung (122) der spezifischen Informationen (IS) ausgehend von dem ersten Sicherheitsdienst (107) zu den den Zielgeräten zugeordneten Zielsicherheitsdiensten (109) gemäß einem TCP/IP-Protokoll oder jeglichem anderen Client/Server-Protokoll ausgeführt wird.

9. Verfahren nach einem der vorhergehenden Ansprüche, bei dem das erzeugte Ereignis ein Authentifizierungs- (AUTH) oder Freigabeereignis nach der Erzeugung einer Kennung (Id) und eines Passworts (Pwd) durch einen Benutzer ist, wobei das Verfahren dann die nachfolgenden unterschiedlichen Schritte umfasst:
- Überprüfen (133) einer Übereinstimmung zwischen der Identität (Id) und dem Passwort (Pwd) mittels der Sitzungsverwaltungsbenutzerschnittstelle (105);
- wenn die Übereinstimmung zwischen der Identität (Id) und dem Passwort (Pwd) erwiesen ist, Vornehmen der Erfassung des erzeugten Ereignisses mittels des Plug-ins (106) der Sitzungsverwaltungsbenutzerschnittstelle (105) des ersten Geräts (101),
- Übertragen der Gruppe spezifischer Informationen (IS(AUTH)), die zumindest die Identität und das Passwort umfassen, die von dem Benutzer erzeugt wurden, ausgehend von dem Plug-in (106) der Sitzungsverwaltungsbenutzerschnittstelle (105) des ersten Geräts (101) zu dem dem ersten Gerät (101) zugeordneten ersten Sicherheitsdienst (107).

10. Verfahren nach dem vorhergehenden Anspruch, bei dem der Schritt zur Ausführung des Authentifizierungs- oder Freigabeereignisses auf jedem Zielgerät für jedes Zielgerät, das die Gruppe spezifischer Informationen empfangen hat, die nachfolgenden unterschiedlichen Schritte umfasst:
- Senden, ausgehend von dem Zielsicherheitsdienst des betreffenden Zielgeräts, einer Mitteilung zum Öffnen oder Freigeben der Sitzungsverwaltungsbenutzerschnittstelle des betreffenden Zielgeräts,
- Senden, ausgehend von einem Plug-in der Sitzungsverwaltungsbenutzerschnittstelle des betreffenden Zielgeräts, einer TCP/IP-Anfrage oder einer Anfrage gemäß einem gleichwertigen Protokoll zu dem Zielsicherheitsdienst des betreffenden Zielgeräts,
- Kommunizieren der Identifikations- und Passwortinformationen ausgehend von dem Sicherheitsdienst zu dem Plug-in des betreffenden Zielgeräts gemäß dem TPC/IP-Protokoll oder gemäß einem gleichwertigen Protokoll,
- Öffnen oder Freigeben einer Arbeitssitzung auf dem betreffenden Zielgerät.

11. Verfahren nach einem der vorhergehenden Ansprüche, bei dem das erzeugte Ereignis ein Ereignis zum Sperren einer Sitzung oder Schließen einer Sitzung nach der Erzeugung eines Sperr- bzw. Schließbefehls durch einen Benutzer ist, wobei der Schritt zur Verarbeitung der spezifischen Informationen bei jedem Zielsicherheitsdienst der Zielgeräte dann die nachfolgenden unterschiedlichen Schritte umfasst:
- Senden, ausgehend von dem Zielsicherheitsdienst jedes betreffenden Zielgeräts, einer Mitteilung zum Sperren oder Schließen einer zuvor geöffneten Arbeitssitzung auf dem betreffenden Gerät,
- Sperren oder Schließen des betreffenden Geräts.

12. Verfahren nach einem der vorhergehenden Ansprüche, bei dem das erzeugte Ereignis ein Ereignis zum Zurücksetzen einer Sitzung nach der Erzeugung eines Rücksetzbefehls durch einen Benutzer ist, wobei der Schritt zur Verarbeitung der spezifischen Informationen bei jedem Zielsicherheitsdienst der Zielgeräte dann die Operation umfasst, die darin besteht, eine Anwendung zum Zurücksetzen jedes Zielgeräts auszuführen, das die dem Rücksetzereignis zugeordneten spezifischen Informationen empfangen hat.

13. Verfahren nach dem vorhergehenden Anspruch, das vor dem Schritt zur Übertragung der dem Rücksetzereignis zugeordneten Gruppe spezifischer Informationen ausgehend von dem Plug-in der Sitzungsverwaltungsbenutzerschnittstelle des ersten Geräts zum ersten Sicherheitsdienst den zusätzlichen Schritt umfasst, der darin besteht, einen Rücksetzmodus auszuwählen, wobei der Rücksetzmodus entweder lokal oder allgemein ist; wenn der lokale Modus ausgewählt ist, wird lediglich das erste Gerät zurückgesetzt, wenn der allgemeine Modus ausgewählt ist, wird die Gesamtheit der Geräte aus dem Gerätecluster zurückgesetzt.

14. Verfahren nach mindestens einem der vorhergehenden Ansprüche, das zum Ausführen einer Sicherheitsanwendung (406; 506) auf dem Zielgerät (102) die zusätzlichen Schritte umfasst, die darin bestehen, da das erste Gerät (101) mit Mitteln zur sicheren Identifizierung ausgestattet ist:
- eine Identifizierungsoperation auf dem ersten Gerät (101) mittels der Werkzeuge zur sicheren Identifizierung auszuführen,
- im Fall einer validierten Identifizierung (504) eine Validierungsmitteilung (VAL) von dem ersten Gerät (101) zu dem zweiten Gerät (102) zu senden, wobei die Validierungsmitteilung das Öffnen der sicheren Anwendung (406; 506) gestattet.

15. Verfahren nach dem vorhergehenden Anspruch, bei dem die Identifizierungswerkzeuge der Art Chipkarte (401)/Chipkartenleser (400) sind, wobei das Verfahren die unterschiedlichen Schritte umfasst, die darin bestehen, vor der Identifizierungsoperation auf dem ersten Gerät:
- einen PIN-Code auf dem zweiten Gerät (102) zu erfassen,
- den PIN-Code von dem zweiten Gerät zu dem ersten Gerät (101) zu senden (403).

16. Verfahren nach Anspruch 14, bei dem die Identifizierungswerkzeuge der Art biometrischer Sensor (501) sind, wobei das Verfahren den Schritt umfasst, der darin besteht, vor der Identifizierungsoperation auf dem ersten Gerät ein Dialogfenster (502) auf dem zweiten Gerät (102) zu öffnen, mit dem ein Benutzer aufgefordert wird, sich auf dem ersten Gerät (101) zu identifizieren.

## Claims

1. Method for propagating session management events between a plurality of machines (101; 102; 103) forming a cluster of machines (104), comprising the following different steps:
- generating, by means of a session management user interface (105), a session management event (AUTH, INIT, VER, FER) on a first machine (101) of the cluster of machines (104);
- detecting (134) by means of a plug-in (106) of the session management user interface (105) of the first machine (101) the generated event (AUTH, INIT, VER, FER);
- transmitting (121), from the plug-in (106) of the session management user interface (105) of the first machine (101) to a first security service (107), associated with the first machine (101), a set of specific information (IS) associated with the detected event;
- determining by means of the first security service (107) a set of target machines, each of the target machines being associated with a target security service (109) that is specific to it;
- transmitting (122) specific information (IS) from the first security service (107) to the target security services (109) associated with the target machines;
- processing the specific information, at each target security service (109) of the target machines having received said specific information (IS) to execute on each target machine having received said specific information (IS) the session management event (AUTH, INIT, VER, FER) generated on the first machine (101) of the cluster of machines (104).

2. Method according to the preceding claim, in which the step of transmitting (122) specific information from the first security service (107) to the target security services (109) associated with the target machines is carried out repeatedly, particularly in a periodic manner.

3. Method according to any one of the preceding claims, in which the step of transmitting (122) specific information from the first security service (107) to the specific security services (109) associated with the target machines is carried out after encryption of the specific information.

4. Method according to any one of the preceding claims, in which the step of determining the set of target machines among the machines of the cluster of machines (104) is carried out by means of a directory (108) accessible by the first security service (107), said directory (108) comprising a list of all the machines of the cluster of machines (104).

5. Method according to the preceding claim, comprising the additional step consisting of modifying the cluster of machines by a directory updating operation.

6. Method according to any one of the preceding claims, comprising the additional step consisting of, for each inactive machine of the cluster of machines not having received a signal from another machine in the cluster for a predetermined duration, causing a session closure or a locking of said machine concerned.

7. Method according to any one of the preceding claims, in which the transmission (121), from the plug-in (106) of the session management user interface (105) to the first security service (107) is carried out according to a protocol of TCP/IP type or any other protocol of client/server type.

8. Method according to at least one of the preceding claims, in which the step of transmitting (122) the specific information (IS) from the first security service (107) to the target security services (109) associated with the target machines is carried out according to a protocol of TCP/IP type or any other protocol of client/server type.

9. Method according to any one of the preceding claims, in which the generated event is an authentication (AUTH) or an unlocking event, following the generation by a user of an identifier (Id) and a password (Pwd), said method then comprising the following different steps:
- verifying (133), by means of the session management user interface (105), a match between the identifier (Id) and the password (Pwd);
- if the match between the identifier (Id) and the password (Pwd) is confirmed, proceeding by means of the plug-in (106) of the session management user interface (105) of the first machine (101) to detection of the generated event;
- transmitting, from the plug-in (106) of the session management user interface (105) of the first machine (101) to the first security service (107) associated with the first machine (101), the set of specific information (IS(AUTH)) including at least the identity and the password generated by the user.

10. Method according to the preceding claim, in which the step of executing on each target machine the authentication or unlocking event comprises for each target machine having received the set of specific information, the following different steps:
- emitting, from the target security service of the target machine concerned a notification for opening or unlocking of the session management user interface of said target machine concerned;
- emitting, from a plug-in of the session management user interface of the target machine concerned to the target security service of the target machine concerned, a TCP/IP request or a request according to an equivalent protocol;
- communicating from the security service to the plug-in of the target machine concerned, according to the TCP/IP protocol or according to an equivalent protocol, the identification and password information;
- opening, or unlocking, a work session on the target machine concerned.

11. Method according to any one of the preceding claims, in which the generated event is a session locking or session closure event, following the generation by a user respectively of a locking or closure command, the step of processing specific information at the level of each target security service of the target machines then comprising the following different operations;
- emitting from the target security service of each target machine concerned, a notification for locking or closure of a working session previously opened on the machine concerned;
- locking or closing of the machine concerned.

12. Method according to any one the preceding claims, in which the generated event is a session rebooting event, following the generation by a user of a rebooting command, the step of processing specific information at the level of each target security service of the target machines then comprising the operation consisting of executing a rebooting application for each target machine having received specific information associated with the rebooting event.

13. Method according to the preceding claim, comprising the additional step, prior to the transmission step, from the plug-in of the session management user interface of the first machine to the first security service, of the set of specific information associated with the rebooting event consisting of selecting a rebooting mode, said rebooting mode being either local or general; if the local mode is selected, only the first machine is rebooted; if the general mode is selected, all of the machines of the cluster of machines are rebooted.

14. Method according to at least one of the preceding claims, comprising, to execute a secure application (406; 506) on the target machine (102), the additional steps consisting of, the first machine (101) being equipped with secure identification tools:
- carrying out an identification operation on the first machine (101) by means of secure identification tools;
- in the case of a validated identification, transmitting (504) a validation message (VAL) of the first machine (101) to the second machine (102), said validation message authorizing the opening of the secure application (406; 506).

15. Method according to the preceding claim, in which the identification tools are of the smart card (401)/smart card reader (400) type, the method comprising the different steps consisting of, prior to the identification operation on the first machine:
- entering a PIN code on the second machine (102);
- transmitting (403) the PIN code of the second machine to the first machine (101).

16. Method according to claim 14, in which the identification tools are of the biometric sensor type (501), the method comprising the step consisting of, prior to the identification operation on the first machine, opening a dialogue window (502) on the second machine (102) inviting a user to identify himself on the first machine (101).
